# EUROPEAN PATENT APPLICATION

(11) **EP 4 682 916 A1**
(43) Date of publication of application: **21.01.2026**
(21) Application number: 25189487.9
(22) Date of filing: 15.07.2025
(51) Int. Cl.: H01F 1/057, H01F 41/02

(54) **SINTERED RE-FE-B PERMANENT MAGNET AND PREPARATION METHOD AND APPLICATION THEREOF**

(30) Priority: 17.07.2024 CN 202410954632
(71) Applicant: Nantong Zhenghai Magnet Co., Ltd., 226500 Jiangsu (CN); Yantai Zhenghai Magnetic Material Co., Ltd., Yantai Shandong 264006 (CN)
(72) Inventor: Yu, Yongjiang, Shandong 264006 (CN); Lu, Miao, Shandong 264006 (CN); Li, Meng, Shandong 264006 (CN); Zhang, Yumeng, Shandong 264006 (CN); Gao, Xiaohua, Shandong 264006 (CN)
(74) Representative: Gille Hrabal Partnerschaftsgesellschaft mbB Patentanwälte

(57) **Abstract**

The invention provides a sintered Re-Fe-B permanent magnet, a preparation method thereof and application thereof. The sintered Re-Fe-B permanent magnet disclosed by the invention has a Ti system precipitated phase, and the Ti system precipitated phase comprises a Re-Fe-Ti-B rod-shaped object; the length of the Re-Fe-Ti-B rod-shaped object ranges from 100 nm to 300 nm; in the Ti-series precipitated phase, the atom percentage content of Re is 1-20 at%, the atom percentage content of Fe is 1-30 at%, the atom percentage content of Ti is 40-90 at%, and the atom percentage content of B is 10-20 at%; the atom percentage content ratio of Ti to B is 4: 1-9: 1. According to the sintered neodymium-iron-boron permanent magnet of the present disclosure, through combination of formula design and process optimization, a large-size Re-Fe-Ti-B rod-shaped object is formed, formation of a boron-rich phase is prevented, the Re-Fe-Ti-B rod-shaped object is only gathered in a grain boundary, grain size growth can be hindered, main phase grain growth can be inhibited, magnetic coupling response among main phase grains can be weakened, and the performance of the sintered Re-Fe-B permanent magnet is improved.

## Description

### TECHNICAL FIELD

The present disclosure belongs to the technical field of the preparation of rare earth permanent magnet materials, and particularly relates to a sintered Re-Fe-B permanent magnet, a preparation method therefor and use thereof.

### BACKGROUND

Rare earth magnets, particularly neodymium-iron-boron (NdFeB) magnets, are widely used in various devices and apparatuses, such as motors, generators, computer hard drives, and the like, due to their excellent magnetic properties. At present, the application of high-performance neodymium-iron-boron in the market is gradually expanding. In order to improve the coercivity of magnets, heavy rare earth elements such as dysprosium (Dy) and terbium (Tb) are generally required to be added, but the scarcity and high cost of these elements limit their wide application.

In the neodymium-iron-boron structure, the boron-rich phase is a non-ferromagnetic phase, which is detrimental to magnetic properties and unhelpful. In the current manufacturing technology, the addition of some metal elements, such as Ti and Zr, which have very low solubility in the grain boundary phase, will generate additional precipitated phases with the B element, thereby reducing the proportion of B-rich phases in the non-magnetic phase and improving the coercivity. In patent document CN116978653A, it is attempted to control the morphology and distribution of the metal precipitated phase by changing the cooling rate so as to improve the coercivity of the magnet, but the method for controlling the cooling rate has high requirements for equipment and is difficult to implement, and the size of the precipitated phase Ti-B rod-shaped object is relatively small. Therefore, how to effectively improve the coercivity of the rare earth magnet in the conventional production process is still an urgent problem to be solved.

### SUMMARY

In order to solve the above defects of the prior art, the present disclosure provides the following technical solutions:
A sintered Re-Fe-B permanent magnet, wherein the sintered Re-Fe-B permanent magnet has a Ti-based precipitated phase, and the Ti-based precipitated phase is a Re-Fe-Ti-B rod-shaped object;
the length of the Re-Fe-Ti-B rod-shaped object is 100-300 nm;
in the Ti-based precipitated phase, the atomic percentage content of Re is 1-20 at%, the atomic percentage content of Fe is 1-30 at%, the atomic percentage content of Ti is 40-90 at%, and the atomic percentage content of B is 10-20 at%; and
the ratio of the atomic percentage content of Ti to the atomic percentage content of B is 4:1-9:1.

In the present disclosure, the Ti-based precipitated phase can also be represented by a Re-Fe-Ti-B phase. In the present disclosure, a Re-Fe-Ti-B rod-shaped object is an object with a length greater than the maximum width (such as diameter) of its transverse section. The shape of the transverse section is not specifically limited and can include, but is not limited to, circular, elliptical, rectangular, and polygonal shapes. Preferably, the length of the rod-shaped object is more than twice the maximum width of the transverse interface, for example, 4 times or 5 times or more. For example, the rod-shaped object can be cuboids or cylinders.

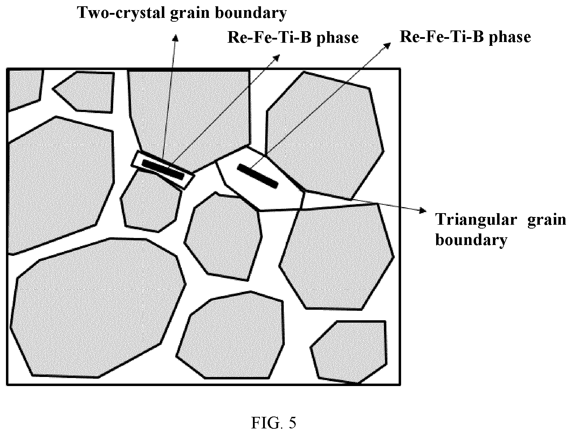

According to an embodiment of the present disclosure, the grain boundary phase refers to a grain boundary between any two grains and/or a grain boundary among any three or more grains. In the present disclosure, grain boundaries between any two grains are denoted as intergranular grain boundaries; grain boundaries among any three or more grains are denoted as triangular grain boundaries, as shown in FIG. 5.

According to an embodiment of the present disclosure, the Ti-based precipitated phase is distributed only in the grain boundary phase.

According to an embodiment of the present disclosure, the Re-Fe-Ti-B rod-shaped object has a length of, for example, 150 nm, 200 nm, or 250 nm.

According to an embodiment of the present disclosure, the atomic percentage content ratio of Ti to B in the Ti-based precipitated phase is 4:1 to 9:1, such as 5:1, 6:1, 7:1, or 8:1.

According to an embodiment of the present disclosure, a composition of the Re-Fe-B permanent magnet is ReₐFe_{1-a-b-c-d}M1_{b}Ti_{c}B_{d}, wherein,
Re is selected from at least one or more of Sm, La, Ce, Y, Nd, Pr, Ho, Gd, Dy, and Tb, 28 wt% ≤ a ≤ 35 wt%;
M1 is selected from at least one or more of Co, Ga, Cu, Al, Nb, and Zr, 0.5 wt% ≤ b ≤ 5 wt%;
the content of Ti is 0.05 wt% < c ≤ 0.5 wt%; preferably, the content of Ti is 0.1 wt% < c < 0.2 wt%; the content of B is 0.8 wt% ≤ d ≤ 1.2 wt%; preferably, the content of B is 0.92 wt% < c < 1.05 wt%; the balance is Fe and inevitable impurity elements.

According to an embodiment of the present disclosure, in the composition of the Re-Fe-B permanent magnet, a, b, c, and d correspond to mass percentage contents.

According to an embodiment of the present disclosure, in the composition of the Re-Fe-B permanent magnet, the atomic content of Re, Ti, and B are [Re], [Ti], and [B], respectively, which have the following relational formula: [Re]-2[B]+4[Ti] ≥ 1.91 at%, preferably 2 at%, 2.5 at%, 3 at%, 3.5 at%, 4 at%, 5 at%, 6 at%, 7 at%, 8 at%, 9 at%, and 10 at%.

The present disclosure further provides a preparation method for the sintered Re-Fe-B permanent magnet described above, which comprises the following steps:
(1) preparing a neodymium-iron-boron quick-setting sheet, and subjecting the neodymium-iron-boron quick-setting sheet to grain boundary broadening treatment;
(2) crushing the neodymium-iron-boron quick-setting sheet to obtain a magnetic powder with an average granularity of 2-5 µm, and then pressing the magnetic powder into a pressed compact; and
(3) subjecting the pressed compact obtained in step (2) to sintering treatment in a vacuum environment to obtain the sintered Re-Fe-B permanent magnet.

According to an embodiment of the present disclosure, in step (1), starting materials for preparing the neodymium-iron-boron quick-setting sheet comprise:
Re, wherein the mass content of Re is 28-35 wt%, and Re is selected from at least one or more of Sm, La, Ce, Y, Nd, Pr, Ho, Gd, Dy, and Tb;
M1, wherein the mass content of M1 is 0.5 wt% ≤ M ≤ 5 wt%, and M1 is selected from at least one or more of Co, Ga, Cu, Al, Nb, and Zr;
Ti, wherein the mass content of Ti is 0.1 wt% < Ti ≤ 0.5 wt%;
B, wherein the mass content of B is 0.8 wt% ≤ B ≤ 1.2 wt%;
the balance is Fe and inevitable impurity elements.

The inventors found that when Re is more than 35 wt%, an excessively high Re content can greatly reduce the magnetic energy product of the magnet and cause a large increase in the cost; when Re is less than 28 wt%, there is no sufficient Re to form Re₂Fe₁₄B main phase grains, resulting in a large decrease in performance. In M1, Co plays a role in facilitating the Curie temperature of the magnet and improving the temperature coefficient of magnetic property; Ga/Cu/Al plays a role in improving the coercivity of the magnet, and Nb/Zr plays a role in substituting part of iron, so that the coercivity and the squareness of the magnet can be effectively improved; when M is less than 0.5 wt%, the coercivity and the temperature stability of the magnet are significantly reduced; when M is greater than 5 wt%, the magnetic energy product of the magnet is greatly reduced.

According to an embodiment of the present disclosure, in order to generate a Re-Fe-Ti-B phase in the grain boundary phase, the atomic content of Re, Ti, and B needs to be further controlled, and the corresponding atomic content thereof has the meaning as described above, for example, [Re]-2[B]+4[Ti] ≥ 1.91% (at%).

If there is too much B in the magnet, a non-magnetic phase B-rich phase will be formed, resulting in a large decrease in the performance of the magnet. Also, both Re and Ti consume B. For Re₂Fe₁₄B, 2% Re requires 1% B to form the necessary main phase grains (at%) of Re₂Fe₁₄B. In addition, Ti also consumes part of B. To ensure that a Re-Fe-Ti-B phase can be formed without forming an additional B-rich phase, the atomic content of Re, Ti, and B needs to satisfy the relational formula described above.

Illustratively, Nd: 29.5 wt%, Ga: 0.2 wt%, Al: 0.2 wt%, Cu: 0.15 wt%, Co: 1.0 wt%, Ti: 0.25 wt%, B: 1.0 wt%, and the balance of Fe and impurity elements.

According to an embodiment of the present disclosure, in step (1), the neodymium-iron-boron quick-setting sheet is prepared using a method known in the art, such as a rapid hardening and strip casting technique. Illustratively, the preparation method for the neodymium-iron-boron quick-setting sheet is as follows: heating the starting materials for preparation to 1300-1600 °C by electromagnetic induction for melting, then pouring the alloy melt on a quenching roller (preferably a ground quenching roller), and cooling to give alloy scales, namely the neodymium-iron-boron quick-setting sheet.

According to an embodiment of the present disclosure, the step of the grain boundary broadening treatment comprises: heating the neodymium-iron-boron quick-setting sheet cooled to 20-80 °C to a high temperature of 700-1000 °C under a vacuum condition for treatment for 1-3 h, and then cooling to room temperature. Preferably, during the grain boundary broadening treatment, the neodymium-iron-boron quick-setting sheets need to be placed in a high-temperature-resistant metal material container to ensure that the neodymium-iron-boron quick-setting sheets are not contaminated.

The inventors also found that during the grain boundary broadening treatment, when the temperature for heating is lower than 700 °C, the rare earth-rich phase in the grain boundary phase cannot be completely melted, resulting in the inability to uniformly distribute the rare earth-rich phase; when the temperature for heating is higher than 1000 °C, the edges of the main phase grains melt and the columnar crystals grow abnormally. When the treatment time is less than 1 hour, the heat which is used to uniformly distribute the rare earth-rich phase cannot be provided; when the treatment time is higher than 3 hours, the cost is increased, and energy is wasted.

The inventors found that in the cooling process of the alloy melt, since the Re-Fe-Ti-B precipitates have a higher melting point, the Re-Fe-Ti-B phase is firstly precipitated in the cooling process, but it is easy to be distributed in disorder in the alloy quick-setting sheets. By performing the grain boundary broadening treatment on the alloy quick-setting sheets, the rare earth-rich phase in the grain boundary phase can be melted and flow, so that the rare earth-rich phase wrapped around the main phase grains (preferably columnar crystals) is more uniformly distributed, which is beneficial for more uniformly wrapping the main phase grains in the crushing process. Therefore, during sintering, the Re-Fe-Ti-B phase is distributed to the grain boundary phase along the molten rare earth-rich phase, and especially aggregates at intergranular grain boundaries and triangular grain boundaries, which provides necessary conditions for the further growth of the Re-Fe-Ti-B phase in the subsequent sintering treatment.

According to an embodiment of the present disclosure, in step (2), the step of crushing specifically comprises: subjecting the neodymium-iron-boron quick-setting sheet to hydrogen decrepitation to obtain a coarsely crushed powder, and then performing a high-energy ball milling process or jet milling crushing with a jet milling process to obtain the magnetic powder. Preferably, a lubricant may also be added during crushing, and the lubricant may be selected from lubricants known in the art and is not specifically limited in the present disclosure. Further, the lubricant is added in an amount of 0.1-1 wt%, such as 0.1-0.5 wt%, of the magnetic powder.

Illustratively, in step (2), the crushing is performed as follows: subjecting the neodymium-iron-boron quick-setting sheet to hydrogen decrepitation to obtain a coarsely crushed powder, and then performing grinding and crushing by jet milling to obtain the magnetic powder with the target particle size; optionally, after the magnetic powder with the target particle size is obtained, 0.1-0.5 wt% lubricant mixture may be added for blending. For example, the mixture is blended for 0.1-5 h to uniformly mix the magnetic powder.

In the present disclosure, the hydrogen decrepitation, the high-energy ball milling process, and the jet milling process can all be performed by using process conditions known in the art, as long as the magnetic powder can be obtained.

According to an embodiment of the present disclosure, in step (2), the preparation of the pressed compact comprises: subjecting the magnetic powder to orientated press molding in a magnetic field to obtain the pressed compact. Preferably, the magnetic field may be a magnetic field known in the art, for example, a magnetic field with a magnetic field intensity of 2 T. Preferably, after the orientated press molding, cold isostatic pressing may optionally be further performed; preferably, the cold isostatic pressing may be performed under conditions known in the art for cold isostatic pressing, which is not specifically limited in the present disclosure.

According to an embodiment of the present disclosure, in step (3), the sintering treatment comprises: stepwise warming the pressed compact in a vacuum environment to a sintering temperature of 1000-1100 °C, maintaining the temperature for 0.5-4 h, cooling, and then performing a pulse aging heat treatment.

Preferably, the stepwise warming specifically comprises: warming from room temperature to a first incubation temperature (e.g., 220-260 °C, such as 240 °C) and maintaining the temperature for 10-60 min, subsequently warming to a second incubation temperature (e.g., 380-420 °C, such as 400 °C) and maintaining the temperature for 10-60 min (e.g., 30 min), then warming to a third incubation temperature (e.g., 700-750 °C, such as 750 °C) and maintaining the temperature for 30-120 min (e.g., 90 min), and further warming to a sintering temperature of 1000-1100 °C and maintaining the temperature for 0.5-4 h (e.g., 3.5 h). Further, in the stepwise warming, the warming rate is 1-10 °C/min, e.g., 5 °C/min, 6 °C/min, and 8 °C/min.

Preferably, the pulse aging heat treatment specifically comprises: (a) warming to 700-900 °C at a warming rate of 5-15 °C/min, maintaining the temperature for 2-6 h, and cooling to room temperature; (b) repeating the operations of step (a) 1-5 times (e.g., 2 times, 3 times, and 4 times); and (c) performing aging at 450-650 °C for 2-6 h.

The inventors found that: 1) during the pulse aging heat treatment, the purpose of controlling the temperature of the aging warming process at 700-900 °C is to melt the rare earth-rich phase; when the number of aging warming is too small, enough energy for uniform distribution and crystallization of the Re-Fe-Ti-B rod-shaped object cannot be provided, so that the aging warming process is performed at least twice; 2) when the pulse aging heat treatment is adopted, the Re-Fe-Ti-B rod-shaped object is distributed along the molten grain boundary to aggregate at grain boundary phases (such as intergranular grain boundaries and triangular grain boundaries). The Ti element and the B element crystallize at the Re-Fe-Ti-B rod-shaped object, such that the size of the Re-Fe-Ti-B rod-shaped object becomes larger, which can hinder the growth of the grain size, weaken the magnetic coupling effect between the main phase grains, and improve the performance of the sintered Re-Fe-B permanent magnet.

The present disclosure further provides a sintered Re-Fe-B permanent magnet prepared by the preparation method described above, wherein the sintered Re-Fe-B permanent magnet has the meaning as described above.

The present disclosure further provides use of the sintered Re-Fe-B permanent magnet described above, preferably in a motor.

### Advantageous Effects of Present Disclosure:

According to the sintered neodymium-iron-boron permanent magnet of the present disclosure, a large-size Re-Fe-Ti-B rod-shaped object is formed through formula design in combination with process optimization, such that the formation of a boron-rich phase is prevented, and the Re-Fe-Ti-B rod-shaped object aggregates in the grain boundary phase, so that the grain size growth can be hindered, the growth of main phase grains can be inhibited, the magnetic coupling effect between the main phase grains can be weakened, and the performance of the sintered Re-Fe-B permanent magnet can be improved.

### BRIEF DESCRIPTION OF THE DRAWINGS

FIG. 1 shows a TEM image of Example 1.
FIG. 2 shows a TEM image of Comparative Example 1.
FIG. 3 shows a TEM image of Comparative Example 3-3.
FIG. 4 shows a schematic diagram of sample column processing.
FIG. 5 shows a schematic diagram of the sintered Re-Fe-B permanent magnet according to the present disclosure.

### DETAILED DESCRIPTION

The technical solutions of the present disclosure are further described in detail below with reference to specific examples. It will be appreciated that the following examples are merely exemplary illustrations and explanations of the present disclosure and should not be construed as limiting the claimed scope of the present disclosure. All techniques implemented on the basis of the above content of the present disclosure fall within the claimed scope of the present disclosure.

Unless otherwise stated, the starting materials and reagents used in the following examples are all commercially available products or can be prepared by using known methods.

### Examples 1-5

Provided is a preparation method for a sintered Re-Fe-B permanent magnet, which comprises the following steps:
(1) starting materials were formulated according to the proportion of Table 1, and the formulated materials were smelted in vacuum, incubated at 1420 °C for 15 min, then cast on the surface of a quenching roller, and then dropped into a water-cooling bucket for cooling to give the desired scales;
(2) the scales in step (1) were subjected to grain boundary broadening treatment, placed in a high-temperature-resistant metal container, placed in a vacuum sintering furnace, warmed from room temperature to 900 °C, incubated at 900 °C for 300 min, and cooled to room temperature;
(3) the scales in step (2) were subjected to hydrogen decrepitation coarse crushing, and then subjected to jet milling grinding to obtain a magnetic powder with a target granularity of VMD = 3.1 µm;
(4) the magnetic powder of step (3) was filled into a vacuum press mold, subjected to orientated press molding under a magnetic field intensity of 2 T, and subjected to cold isostatic pressing to obtain a pressed compact;
(5) the pressed compact of step (4) was placed in a vacuum sintering furnace, warmed from room temperature to 240 °C at a rate of 6 °C/min, and incubated at 240 °C for 60 min; then warmed to 400 °C at a rate of 4 °C/min, and incubated at 400 °C for 30 min; then warmed to 750 °C at a rate of 5 °C/min, and incubated at 750 °C for 90 min; then warmed to 1040 °C at a warming rate of 8 °C/min and sintered for 3.5 h; and then subjected to pulse aging heat treatment: (a) subjected to a first-stage aging treatment at 800 °C for 4 h and cooled to room temperature; (b) the first-stage aging treatment of step (a) was repeated for 3 times; and (c) subjected to a second-stage aging treatment at 480 °C for 4 h to obtain an Nd-Fe-B blank, which was the sintered Re-Fe-B permanent magnet.

### Comparative Example 1

The method for preparing the sintered Re-Fe-B permanent magnet in this comparative example was substantially the same as that in Example 1, except that: the scales in step (1) were directly treated according to steps (3) to (5) without the grain boundary broadening treatment in step (2).

### Comparative Example 2

The method for preparing the sintered Re-Fe-B permanent magnet in this comparative example was substantially the same as that in Example 1, except that: in step (5), the pulse aging heat treatment was not performed after the sintering was completed;
the other steps were the same as those in Example 1.

### Comparative Examples 3-1, 3-2, and 3-3

The methods for preparing the sintered Re-Fe-B permanent magnets in Comparative Examples 3-1, 3-2, and 3-3 were substantially the same as those in Example 1, except that: in step (1), the corresponding starting material formulas in Table 1 were used for proportion and formulation;
the other steps were the same as those in Example 1.

**Table 1. Starting material proportion for examples and comparative examples**

| | Pr wt% | Nd wt% | Dy wt% | Ce wt% | Fe wt% | Co wt% | Ga wt% | Cu wt% | Al wt% | Ti wt% | B wt% | [Re]-2[B]+4[Ti] |
|---|---|---|---|---|---|---|---|---|---|---|---|---|
| Example 1 | 5.9 | 23.6 | 0 | 0 | Bal. | 1.0 | 0.2 | 0.15 | 0.2 | 0.25 | 1.0 | 2.62 at% |
| Example 2 | 6.9 | 22.3 | 1.5 | 0 | Bal. | 2.5 | 0.2 | 0.17 | 0.1 | 0.2 | 0.97 | 3.43 at% |
| Example 3 | 6.8 | 22.9 | 0 | 0 | Bal. | 1.5 | 0.1 | 0.17 | 0.7 | 0.15 | 0.98 | 4.03 at% |
| Example 4 | 6.8 | 22.8 | 0 | 0 | Bal. | 0.5 | 0.15 | 0.25 | 0.05 | 0.15 | 0.97 | 2.56 at% |
| Comparative Example 1 | 5.9 | 23.6 | 0 | 0 | Bal. | 1.0 | 0.2 | 0.15 | 0.2 | 0.25 | 1.0 | 2.62 at% |
| Comparative Example 2 | 5.9 | 23.6 | 0 | 0 | Bal. | 1.0 | 0.2 | 0.15 | 0.2 | 0.25 | 1.0 | 2.62 at% |
| Comparative Example 3-1 | 5.9 | 23.6 | 0 | 0 | Bal. | 1.0 | 0.2 | 0.15 | 0.2 | 0.25 | 1.25 | -0.13 at% |
| Comparative Example 3-2 | 5.9 | 23.6 | 0 | 0 | Bal. | 1.0 | 0.2 | 0.15 | 0.2 | 0.03 | 1.0 | 1.54 at% |
| Comparative Example 3-3 | 5.9 | 23.6 | 0 | 0 | Bal. | 1.0 | 0.2 | 0.15 | 0.2 | 0.18 | 1.1 | 1.03 at% |

In Table 1, the content of each element is a mass percentage content; [Re], [B] and [Ti] represent the atomic percentage content of Re, B and Ti, respectively.

### Test Example

### (1) Magnetic property test:

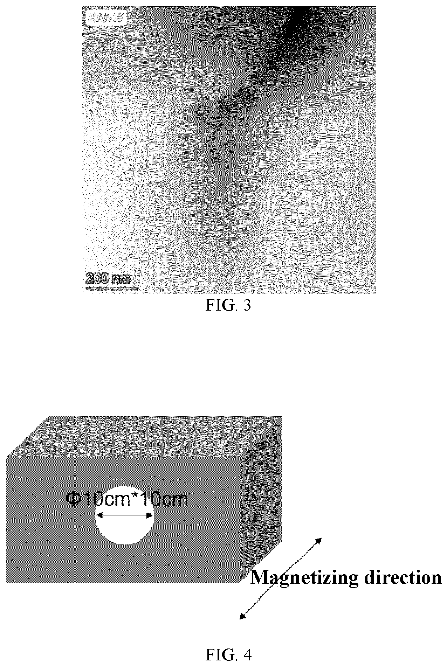

After the surface layer of the Nd-Fe-B blanks prepared in the examples and the comparative examples described above was uniformly removed, φ10×10 sample columns were processed along the magnetizing direction of the central symmetry axis of the blanks for magnetic property testing. The schematic diagram of sample column processing is shown in FIG. 4.

### (2) Structure characterization:

The Nd-Fe-B blanks prepared in the examples and the comparative examples described above were each sampled at the corners and in the central area, and TEM detection samples with a thickness of 150 nm (φ3 mm) were prepared and observed by a TEM device. After magnification, at least one intact main phase grain or grain boundary phase (including a rare earth-rich phase) was present in the observation field of view, and the composition analysis of the element distribution points containing the Ti element was performed on the observation field of view.

The test results are shown in Table 2.

**Table 2. Test results of examples and comparative examples**

| | Magnetic properties | | Re-Fe-Ti-B phase | | | | |
|---|---|---|---|---|---|---|---|
| | Br@20 °C /T | Hcj@20 °C /kA/m | Presence or absence in grain boundary | Presence or absence in grain | Phase component (at%) | Ti:B | Size of Re-Fe-Ti-B rod-shaped object |
| Example 1 | 1.471 | 1218 | Yes | No | (PrNd)_{1.9}Fe_{4.1} Ti_{81.4}B_{12.6} | 6.46:1 | 255 nm |
| Example 2 | 1.370 | 1503 | Yes | No | (PrNd)_{14.1}Dy_{0.5}Fe_{13.3}Ti_{61.8}1B_{10.3} | 6.00:1 | 193 nm |
| Example 3 | 1.282 | 1799 | Yes | No | (PrNd)_{5.6}Fe_{7.09}Ti_{76.41}B_{10.9} | 7.01:1 | 234 nm |
| Example 4 | 1.44 | 1421 | Yes | No | (PrNd)_{7.02}Fe_{8.62}Ti_{68.92}B_{15.44} | 4.48:1 | 198 nm |
| Comparative Example 1 | 1.455 | 1107 | Yes | Yes | (PrNd)_{10.6}Fe_{33.8}Ti₄₈B_{7.6} | 6.32:1 | 125 nm |
| Comparative Example 2 | 1.465 | 1123 | Yes | No | (PrNd)_{15.58}Fe_{12.28}Ti_{57.28}B_{14.86} | 3.85:1 | 80 nm |
| Comparative Example 3-1 | 1.478 | 1009 | No | No | Cannot be formed | / | / |
| Comparative Example 3-2 | 1.464 | 989 | No | No | Cannot be formed | / | / |
| Comparative Example 3-3 | 1.476 | 1054 | No | No | Cannot be formed | / | / |

### Test results:

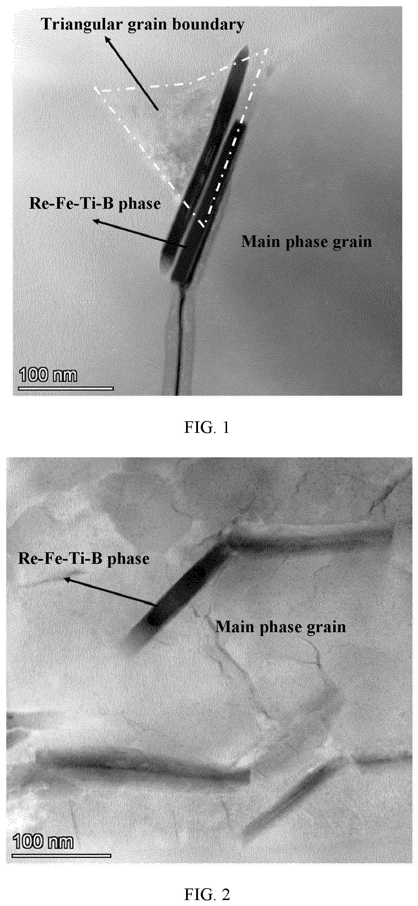

FIG. 1 is a TEM image of the sample of Example 1. In the sample of Example 1, a Re-Fe-Ti-B phase (which is a Re-Fe-Ti-B rod-shaped object) was observed. The phase was only distributed at grain boundaries, and had a component of (PrNd)_{1.9}Fe_{4.1} Ti_{81.4}B_{12.6}; the phase was a rod-shaped object with a length of about 255 nm.

FIG. 2 is a TEM image of the sample of Comparative Example 1. In the sample of Comparative Example 1, a Re-Fe-Ti-B phase was observed. The phase was distributed in the main phase grains. FIG. 3 is a TEM image of the sample of Comparative Example 3-3. In the sample of Comparative Example 3-3, no Re-Fe-Ti-B phase was observed.

As can be seen from Tables 1 and 2:
A Re-Fe-Ti-B phase can be observed in the grain boundary phases of Examples 1, 2, 3, and 4, and the Re-Fe-Ti-B rod-shaped object is distributed along the molten grain boundary to aggregate at grain boundary phases (such as intergranular grain boundaries and triangular grain boundaries). The Ti element and the B element crystallize at the Re-Fe-Ti-B rod-shaped object, and there is no crystallization of the Re-Fe-Ti-B rod-shaped object in the main phase grains. Also, the sizes of the Re-Fe-Ti-B rod-shaped objects were observed to be 255 nm, 193 nm, 234 nm, and 198 nm, respectively. Since the large-size Re-Fe-Ti-B phase was enriched at the grain boundary phase, the grain size growth can be better hindered, the magnetic coupling effect between the main phase grains can be weakened, and the performance of the sintered Re-Fe-B permanent magnet can be improved. As can be seen from the comparison between Example 1 and Comparative Examples 3-1, 3-2, and 3-3, the Re-Fe-Ti-B rod-shaped object can be formed in the grain boundary phase of the permanent magnet only under the content and ratio of B and Ti in the present disclosure.

As can be seen from the comparison between Example 1 and Comparative Example 1, if only the pulse aging treatment was performed without the grain boundary broadening treatment, although a Re-Fe-Ti-B phase was present in the grain boundary phase of the permanent magnet, part of the Re-Fe-Ti-B rod-shaped object would also enter the main phase grains, thereby destroying the structure of the main phase grains and causing a significant decrease in the Br value of the permanent magnet. As can be seen from the comparison between Example 1 and Comparative Example 2, when the compositions of the Nd-Fe-B blanks were the same, if only the grain boundary broadening treatment was performed, a Re-Fe-Ti-B rod-shaped object could also be generated in the grain boundary phase of the permanent magnet, but the size of the Re-Fe-Ti-B rod-shaped object was significantly reduced due to the absence of the pulse aging treatment. Therefore, the magnetic properties of Comparative Example 2 were inferior compared with Example 1.

In summary, the inventors believe that the grain boundary broadening treatment and the pulse aging treatment can make the Re-Fe-Ti-B phase crystallize, and aggregate and grow at intergranular grain boundaries and triangular grain boundaries to obtain Re-Fe-Ti-B rod-shaped objects, so that the growth of main phase grains can be effectively inhibited, the proportion of boron-rich phases in the permanent magnet is reduced, and finally, the magnetic property of the permanent magnet is improved.

The exemplary embodiments of the present disclosure have been described above. However, the protection scope of the present application is not limited to the above embodiments. Any modification, equivalent, improvement, and the like made by those skilled in the art without departing from the spirit and principle of the present disclosure shall fall within the protection scope of the present disclosure.

## Claims

1. A sintered Re-Fe-B permanent magnet, wherein the sintered Re-Fe-B permanent magnet has a Ti-based precipitated phase, and the Ti-based precipitated phase is a Re-Fe-Ti-B rod-shaped object; the length of the Re-Fe-Ti-B rod-shaped object is 100-300 nm;
in the Ti-based precipitated phase, the atomic percentage content of Re is 1-20 at%, the atomic percentage content of Fe is 1-30 at%, the atomic percentage content of Ti is 40-90 at%, and the atomic percentage content of B is 10-20 at%; and
the ratio of the atomic percentage content of Ti to the atomic percentage content of B is 4:1-9:1.

2. The sintered Re-Fe-B permanent magnet as claimed in claim 1, wherein the Ti-based precipitated phase is only distributed in a grain boundary phase.

3. The sintered Re-Fe-B permanent magnet as claimed in claim 1 or 2, wherein an composition of the Re-Fe-B permanent magnet is ReₐFe_{1-a-b-c-d}M1_{b}Ti_{c}B_{d}, wherein,
Re is selected from at least one or more of Sm, La, Ce, Y, Nd, Pr, Ho, Gd, Dy, and Tb, 28 wt% ≤ a ≤ 35 wt%;
M1 is selected from at least one or more of Co, Ga, Cu, Al, Nb, and Zr, 0.5 wt% ≤ b ≤ 5 wt%;
the content of Ti is 0.05 wt% < c ≤ 0.5 wt%;
the content of B is 0.8 wt% ≤ d ≤ 1.2 wt%;
the balance is Fe and inevitable impurity elements.

4. The sintered Re-Fe-B permanent magnet as claimed in claim 1, wherein in the composition of the Re-Fe-B permanent magnet, the atomic content of Re, Ti, and B are [Re], [Ti] and [B], respectively, and [Re], [Ti] and [B] have the following relational formula: [Re]-2[B]+4[Ti] ≥ 1.91 at%.

5. A method for preparing the sintered Re-Fe-B permanent magnet as claimed in any one of claims 1-4, wherein the method comprises the following steps:
(1) preparing a neodymium-iron-boron quick-setting sheet, and subjecting the neodymium-iron-boron quick-setting sheet to grain boundary broadening treatment;
(2) crushing the neodymium-iron-boron quick-setting sheet to obtain a magnetic powder with an average granularity of 2-5 µm, and then pressing the magnetic powder into a pressed compact; and
(3) subjecting the pressed compact obtained in step (2) to sintering treatment in a vacuum environment to obtain the sintered Re-Fe-B permanent magnet.

6. The preparation method as claimed in claim 5, wherein in step (1), starting materials for preparing the neodymium-iron-boron quick-setting sheet comprise:
Re, wherein the mass content of Re is 28-35 wt%, and Re is selected from at least one or more of Sm, La, Ce, Y, Nd, Pr, Ho, Gd, Dy, and Tb;
M1, wherein the mass content of M1 is 0.5 wt% ≤ M ≤ 5 wt%, and M1 is selected from at least one or more of Co, Ga, Cu, Al, Nb, and Zr;
Ti, wherein the mass content of Ti is 0.1 wt% < Ti ≤ 0.5 wt%;
B, wherein the mass content of B is 0.8 wt% ≤ B ≤ 1.2 wt%;
the balance is Fe and inevitable impurity elements;
in step (1), the step of the grain boundary broadening treatment comprises: heating the neodymium-iron-boron quick-setting sheet cooled to 20-80 °C to a high temperature of 700-1000 °C under a vacuum condition for treatment for 1-3 h, and then cooling to room temperature.

7. The preparation method as claimed in claim 5, wherein in step (2), the step of crushing specifically comprises: subjecting the neodymium-iron-boron quick-setting sheet to hydrogen decrepitation to obtain a coarsely crushed powder, and then performing a high-energy ball milling process or jet milling crushing with a jet milling process to obtain the magnetic powder;
in step (2), the preparation of the pressed compact comprises: subjecting the magnetic powder to orientated press molding in a magnetic field to obtain the pressed compact.

8. The preparation method as claimed in claim 5, wherein in step (3), the sintering treatment comprises: stepwise warming the pressed compact in a vacuum environment to a sintering temperature of 1000-1100 °C, maintaining the temperature for 0.5-4 h, cooling, and then performing a pulse aging heat treatment.

9. The preparation method as claimed in claim 8, wherein the stepwise warming specifically comprises: warming from room temperature to a first incubation temperature and maintaining the temperature for 10-60 min, subsequently warming to a second incubation temperature and maintaining the temperature for 10-60 min, then warming to a third incubation temperature and maintaining the temperature for 30-120 min, and further warming to a sintering temperature of 1000-1100 °C and maintaining the temperature for 0.5-4 h;
the pulse aging heat treatment specifically comprises: (a) warming to 700-900 °C at a warming rate of 5-15 °C/min, maintaining the temperature for 2-6 h, and cooling to room temperature; (b) repeating the operations of step (a) 1-5 times; and (c) performing aging at 450-650 °C for 2-6 h.

10. Use of the sintered Re-Fe-B permanent magnet as claimed in any one of claims 1-4 in a motor.
